# EUROPÄISCHE PATENTSCHRIFT

(11) **EP 3 575 505 B1**
(45) Veröffentlichungstag und Bekanntmachung des Hinweises auf die Patenterteilung: **28.07.2021**
(21) Anmeldenummer: 18175638.8
(22) Anmeldetag: 01.06.2018
(51) Int. Cl.: E03F 7/12, H04N 5/77, H04N 7/18

(54) **KANALINSPEKTIONS- UND/ODER WARTUNGSSYSTEM**
SEWER INSPECTION AND/OR MAINTENANCE SYSTEM
SYSTÈME D'INSPECTION ET/OU DE MAINTENANCE DE CANAL

(43) Veröffentlichungstag der Anmeldung: 04.12.2019
(73) Patentinhaber: iPEK International GmbH, 87477 Sulzberg (DE)
(72) Erfinder: Kress, Michael, 87437 Kempten (DE); Kaderabek, Harald, 87474 Buchenberg (DE); Zahnd, Fabian, 87437 Kempten (DE); Pomp, Dominik, 87435 Kempten (DE)
(74) Vertreter: 2s-ip Schramm Schneider Bertagnoll Patent- und Rechtsanwälte Part mbB

(56) Entgegenhaltungen:
- WO-A1-2014/129854
- DE-U1-202014 102 384
- DE-U1-202017 104 428
- US-A1- 2015 366 442
- Patryk Ganko: "2 3/2015 ZABEZPIECZENIA Analog High Definition CCTV (AHD) by NOVUS", , 18. April 2016 (2016-04-18), XP055497387, Gefunden im Internet: URL:http://www.novuscctv.com/sites/default /files/reklamy/pdf/Zabezpieczenia_press_An alog_High_Definition_AHD_NOVUS_EN.pdf [gefunden am 2018-08-03]

## Beschreibung

### Gebiet der Erfindung

Die Erfindung betrifft ein Kanalinspektions- und/oder Wartungssystem mit einer Inspektions- und/oder Wartungseinrichtung und einer Kontrolleinrichtung, wobei die Inspektions- und/oder Wartungseinrichtung und die Kontrolleinrichtung angepasst sind, von einem Bildaufnahmesystem bereitgestellte digitale Videodaten zu übertragen. Ferner betrifft die Erfindung ein entsprechend ausgestaltetes Verfahren zur Übertragung von digitalen Bilddaten.

### Hintergrund der Erfindung

Zur Durchführung von Rohr- bzw. Kanalinspektionen oder Rohr- bzw. Kanalwartungen ist es bekannt, sogenannte Inspektions- und/oder Wartungseinrichtungen zu verwenden, die in das zu inspizierende bzw. zu wartende Rohr eingebracht werden können und im Rohr verfahren bzw. verschoben werden können. Die Inspektions- und/oder Wartungseinrichtung weist hierbei ein Bildaufhahmesystem auf, etwa eine Videokamera, wobei die aufgenommenen Videodaten über ein Kabel durch den Kanal bzw. das Rohr an eine Kontrolleinrichtung übertragen werden.

Bei der Verwendung von analogen SD-Kameras wird das analoge Videobild beispielsweise über eine Zweidrahtleitung, eine Twisted-Pair-Leitung, eine Koaxialleitung oder eine Glasfaserleitung übertragen. Diese Leitungen befinden sich in der Regel innerhalb eines Kabels, in dem weitere Leitungen für die Spannungsversorgung und/oder Übertragung weiterer Daten vorhanden sein können.

Bei hochauflösenden Videokameras (HD-Kameras) müssen an die Qualität der Leitungen wesentlich höhere Anforderungen gestellt werden, damit ein hochauflösendes Videosignal übertragen werden kann. Das hochauflösende Videosignal wird digital übertragen. Je nach zur Verfügung stehender Bandbreite für die Übertragung muss das digitale Videosignal vor der Übertragung komprimiert werden, was allerdings zu Komprimierungsartefakten führen kann. Durch die hierfür notwendige Verarbeitung der Videodaten kann es zudem zu unerwünschten Latenzen kommen. Darüber hinaus ist die digitale Übertragung von Videodaten meist relativ kostspielig, alleine schon deshalb, weil Leitungen mit größerer Qualität verwendet werden müssen.

Dokument DE2017104428U1 beschreibt ein Kanalinspektions-/Instandhaltungssystem, bei dem Bilddaten als digitale Daten übertragen werden.

Dokument WO2014/129854A1 beschreibt ein hochauflösendes Videosignal-Langstrecken-Kabelübertragungssystem, bei dem von einer Kamera gelieferte digitale Videosignale vor der Übertragung in analoge hochauflösende Signale umgewandelt werden.

Dokument XP05545497387 beschreibt ein CCTV-System (Closed Circuit Television), das analoge hochauflösende Kameras (AHD) verwendet.

Dokument US2015/366442A1 beschreibt ein endoskopisches Videobildsystem, bei dem eine Endoskop Kamera Bilder im Ist-Zustand an ein Steuer- und Bildverarbeitungsgerät überträgt.

### Aufgabe der Erfindung

Aufgabe der vorliegenden Erfindung ist es daher, Lösungen bereitzustellen, die ein einfaches und kostengünstiges Übertragen von digitalen Videodaten in einem Inspektions- und/oder Wartungssystem ermöglichen. Insbesondere ist es eine Aufgabe der Erfindung, hochaufgelöste, digitale Videodaten einfach und kostengünstig in einem Inspektions- und/oder Wartungssystem zu übertragen.

### Erfindungsgemäße Lösung

Erfindungsgemäß wird dieser Aufgabe durch ein Inspektions- und/oder Wartungssystem nach dem im beigefügten unabhängigen Anspruch 1 gelöst.

Vorteilhafte Ausführungsformen der Erfindung sind in den jeweiligen abhängigen Ansprüchen dargelegt.

Ein wesentlicher Vorteil der vorliegenden Erfindung ist darin zu sehen, dass bereits vorhandene und für die Übertragung von analogen Videodaten ausgelegte Kabel verwendet werden können, um die von einer Bildaufnahmeeinrichtung bereitgestellten, digitalen Videodaten zu übertragen.

Durch die Verwendung des AHD-Standards für die analoge Übertragung der digitalen Videodaten können auch hochaufgelöste, digitale Videodaten (etwa Full HD, 2K-, 4K- oder 8K-aufgelöste Videodaten) analog und ohne Qualitätsverlust übertragen werden.

Ein weiterer Vorteil liegt darin, dass die von den Bildaufnahmesystemen bereitgestellten hochaufgelösten, digitalen Videodaten auf einfachen Leitungen und Koaxialkabeln über mehrere hundert Meter analog übertragen werden können.

Ein noch weiterer Vorteil liegt darin, dass die Videodaten vor der Übertragung nicht komprimiert werden müssen, wodurch einerseits Komprimierungsartefakte vermieden werden und andererseits eine latenzfreie Übertragung möglich wird.

Zudem kann mit dem AHD-Standard ein sogenannter Stcucrkanal bereitgestellt werden, über den die Kontrolleinrichtung des Inspektionssystems die Kamera der Inspektions- und/oder Wartungseinrichtung parametrisieren und steuern kann.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein erfindungsgemäßes Inspektions- und/oder Wartungssystem;
- Fig. 2: ein erstes Ausführungsbeispiel für eine erfindungsgemäße Übertragung von digitalen Videodaten in einem Inspektions- und/oder Wartungssystem; und
- Fig. 3: ein zweites Ausführungsbeispiel einer erfindungsgemäßen Übertragung von digitalen Videodaten in einem Inspektions- und/oder Wartungssystem.

### Detaillierte Beschreibung der Erfindung

Nachfolgend wird die Erfindung anhand eines Kanalinspektions- und/oder Wartungssystems näher beschrieben. Das Kanalinspektions- und/oder Wartungssystem wird nachfolgend vereinfacht als Inspektionssystem bezeichnet. Die Inspektions- und/oder Wartungseinrichtung des erfindungsgemäßen Inspektionssystems wird nachfolgend vereinfacht als Inspektionseinrichtung bezeichnet.

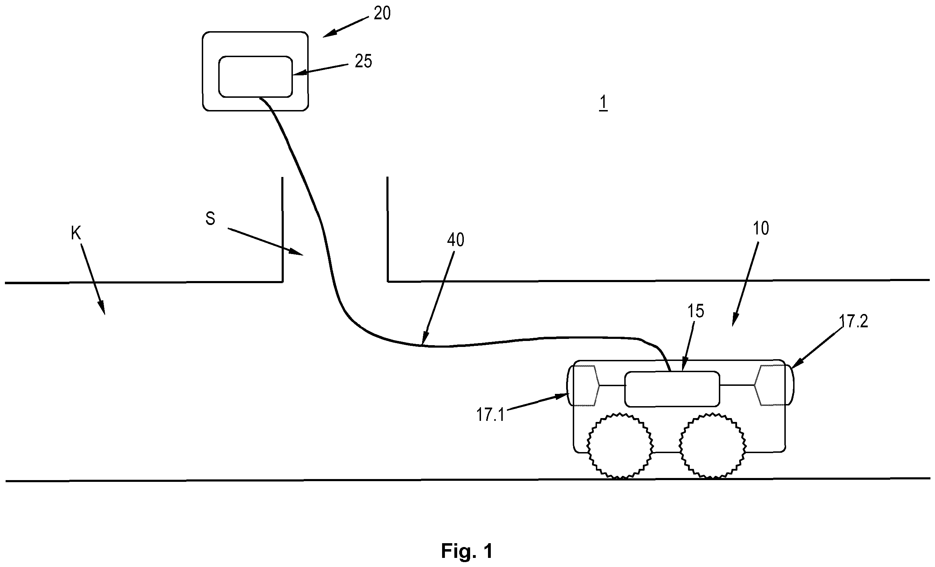

**Fig. 1** zeigt ein erfindungsgemäßes Inspektionssystem 1 mit einer Inspektionseinrichtung 10 und einer Kontrolleinrichtung 20.

Die Inspektionseinrichtung 10 kann ein Fahrwagen, der in dem Kanal K verfahrbar ist, oder ein Schiebesystem, das in dem Kanal K verschiebbar ist, sein. Über eine kabelgebundene Kommunikationsverbindung 40 ist die Inspektionseinrichtung 10 mit der Kontrolleinrichtung 20 gekoppelt bzw. verbunden. Die Kommunikationsverbindung 40 kann beispielsweise mit einem Koaxialkabel oder anderen für die analoge Signalübertragung geeigneten Leitungen, etwa eine Zweidrahtleitung, realisiert werden.

An der Inspektionseinrichtung 10 ist zumindest ein Bildaufnahmesystem angeordnet, wobei bei der in Fig. 1 gezeigten Ausgestaltung des Inspektionssystems 10 ein erstes Bildaufnahmesystem 17.1 und ein zweites Bildaufhahmesystem 17.2 vorgesehen sind. Bei dem ersten Bildaufhahmesystem 17.1 handelt es sich hier um eine nach hinten gerichtete HD-Videokamera. Bei dem zweiten Bildaufhahmesystem 17.2 handelt es sich hier um eine nach vorne gerichtete HD-Videokamera. Mit den beiden Videokameras 17.1 und 17.2 können digitale hochaufgelöste Videos (Full HD, 2K, 4K oder 8K) aufgenommen werden und zur Übertragung über das Kabel 40 an die Kontrolleinrichtung 20 bereitgestellt werden.

Selbstverständlich sind mit der vorliegenden Erfindung auch Inspektionseinrichtungen 10 möglich, die nur ein Bildaufnahmesystem oder mehr als zwei Bildaufnahmesysteme aufweisen.

An der Inspektionseinrichtung 10 ist eine Sendeeinrichtung 15 angeordnet, die mit dem Bildaufnahmesystem oder mit den Bildaufnahmesystemen 17.1 und 17.2 operativ gekoppelt ist. Die Sendeeinrichtung 15 nimmt die von den Bildaufhahmesystemen bereitgestellten digitalen, hochaufgelösten Videodaten entgegen und sendet diese gemäß dem AHD-Standard an die Kontrolleinrichtung 20. Hierzu weist die Sendeeinrichtung 15 einen Wandler auf, der die hochaufgelösten, digitalen Videodaten der Bildaufhahmesysteme in analoge Videodaten gemäß dem AHD-Standard umsetzt. Diese Umsetzung kann ohne Zeitverlust erfolgen, sodass eine weitgehend latenzfreie Übertragung der analogen Videodaten gewährleistet ist.

Durch die analoge Übertragung kann auch bei sehr hoch aufgelösten, digitalen Videodaten (etwa 4K oder 8K) auf eine Komprimierung verzichtet werden. Dadurch werden einerseits Komprimierungsartefakte und andererseits negative Auswirkungen auf die Latenz vermieden.

Die Kontrolleinrichtung 20 weist eine Empfangseinrichtung 25 auf, die operativ mit dem Kabel 40 gekoppelt ist. Die Empfangseinrichtung 25 ist angepasst, die gemäß dem AHD-Standard übertragenen analogen Videodaten zu empfangen. Die empfangenen analogen Videodaten können dann an der Kontrolleinrichtung 20 direkt zur Anzeige gebracht werden, oder in ein bestimmtes digitales oder analoges Ausgangsformat umgesetzt werden. Ist eine solche Umsetzung der empfangenen analogen Videodaten gewünscht, kann die Empfangseinrichtung 25 (oder alternativ die Kontrolleinrichtung 20) einen Wandler aufweisen, mit dem die gemäß dem AHD-Standard empfangenen analogen Videodaten in dieses vorbestimmte digitale oder analoge Ausgangsformat umgesetzt werden.

Die Kommunikationsverbindung 40 kann einen Steuerkanal aufweisen, mit dem die Kontrolleinrichtung 20 gemäß dem AHD-Standard Steuersignale an die Inspektionseinrichtung 10 übertragen kann.

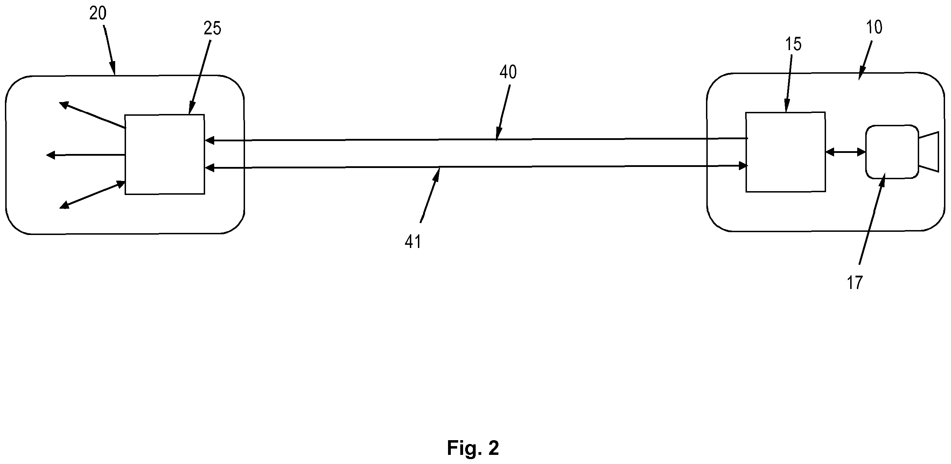

**Fig. 2** zeigt ein erstes konkretes Ausführungsbeispiel eines erfindungsgemäßen Inspektionssystems.

Das Inspektionssystem weist eine Inspektionseinrichtung 10 und eine Kontrolleinrichtung 20 auf, die über eine Kommunikationsverbindung 40 miteinander gekoppelt sind. Die Inspektionseinrichtung 10 weist eine Sendeeinrichtung 15 auf, die einerseits mit einem Bildaufnahmesystem (z.B. HD-Videokamera) gekoppelt ist und hochaufgelöste Videodaten von dem Bildaufnahmesystem 17 entgegennimmt, und die andererseits mit der Kommunikationsverbindung 40 gekoppelt ist.

Die Kontrolleinrichtung 20 weist eine Empfangseinrichtung 25 auf, die mit der Kommunikationsverbindung 40 gekoppelt ist und die über diese Kommunikationsverbindung 40 die von der Sendeeinrichtung 15 der Inspektionseinrichtung 10 gemäß dem AHD-Standard übertragenen analogen Videodaten entgegennimmt.

Die Empfangseinrichtung 25 der Kontrolleinrichtung 20 stellt die empfangenen analogen Videodaten zur weiteren Verarbeitung zur Verfügung, wobei die Empfangseinrichtung 25 entsprechende Ausgänge aufweisen kann. Beispielsweise kann die Empfangseinrichtung 25 die empfangenen analogen Videodaten an einem digitalen Ausgang als digitale Videodaten zur Verfügung stellen. Ein entsprechender Wandler setzt die empfangenen analogen Videodaten in die entsprechenden digitalen Videodaten um.

Darüber hinaus kann die Empfangseinrichtung 25 auch über Anschlüsse verfügen, über die der Empfangseinrichtung Kontroll- und/oder Steuerdaten zugeführt werden können bzw. über die die Empfangseinrichtung 25 Kontroll- bzw. Steuerdaten zur Verfügung stellt. Die der Empfangseinrichtung 25 zur Verfügung gestellten Steuer- bzw. Kontrolldaten können über einen Steuerkanal 41 der Kommunikationsverbindung 40 (der Steuerkanal 41 ist in Fig. 2 getrennt von der Kommunikationsverbindung 40 gezeigt - in der Praxis ist dieser Steuerkanal 41 aber Teil der Kommunikationsverbindung 40) an die Sendeeinrichtung 15 der Inspektionseinrichtung 10 übertragen werden. Die Empfangseinrichtung 25 und die Sendeeinrichtung 15 sind entsprechend ausgestaltet, um diese Daten senden bzw. empfangen zu können. Mit den Steuer- und/oder Kontrolldaten kann die Kontrolleinrichtung 20 die Inspektionseinrichtung 10, insbesondere aber die Bildaufnahmesysteme der Inspektionseinrichtung 10 parametrisieren und steuern. Selbstverständlich können mit diesen Kontroll- und/oder Steuerdaten auch andere Einheiten der Inspektionseinrichtung, etwa Beleuchtungseinrichtungen, Werkzeuge oder dergleichen, gesteuert werden. Zudem kann die Sendeinrichtung 15 der Kontrolleinrichtung 20 über diesen Steuerkanal 41 beispielsweise Kontrolldaten zur Verfügung stellen.

Gemäß dem in Fig. 2 gezeigten Ausführungsbeispiel werden von der HD-Videokamera 17 bereitgestellte hochaufgelöste Videodaten gemäß dem AHD-Standard als analoge Videodaten von der Inspektionseinrichtung 10 an die Kontrolleinrichtung 20 übertragen, wobei die Videodaten über die gesamte Kommunikationsstrecke zwischen der Sendeeinrichtung 15 und der Empfangseinrichtung 25 gemäß dem AHD-Standard übertragen werden.

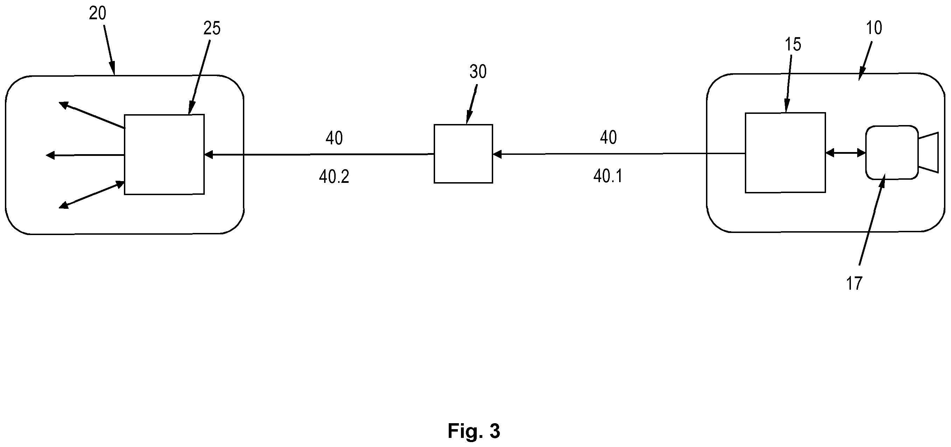

**Fig. 3** zeigt eine alternative Ausgestaltung eines erfindungsgemäßen Inspektionssystems, bei dem lediglich über eine Teilstrecke der zwischen der Sendeeinrichtung 15 und der Empfangseinrichtung 25 eingerichteten Kommunikationsverbindung 40 die Bilddaten gemäß dem AHD-Standard als analoge Videodaten übertragen werden.

In der Kommunikationsverbindung 40 ist hier ein Umsetzer 30 angeordnet, mit dem die Kommunikationsverbindung 40 in zwei Teilstrecken 40.1 und 40.2 unterteilt wird. Die erste Teilstrecke 40.1 bildet hierbei eine Kommunikationsverbindung zwischen der Sendeeinrichtung 15 und dem Umsetzer 30. Die zweite Teilstrecke 40.2 bildet die Kommunikationsverbindung zwischen dem Umsetzer 30 und der Empfangseinrichtung 25.

Gemäß dem in Fig. 3 gezeigten Ausführungsbeispiel ist es erfindungsgemäß vorgesehen, dass die von dem Bildaufnahmesystem 17 bereitgestellten hochaufgelösten Videodaten über eine der beiden Teilstrecken gemäß dem AHD-Standard als analoge Videodaten übertragen werden. Über die jeweils andere Teilstrecke können diese Videodaten in digitaler Form gemäß einem vorbestimmten digitalen Übertragungsstandard oder alternativ in analoger Form gemäß einem zum AHD-Standard verschiedenen analogen Übertragungsstandard übertragen werden.

Je nachdem, über welche Teilstrecke 40.1, 40.2 die von dem Bildaufhahmesystem 17 bereitgestellten hochaufgelösten Videodaten gemäß dem AHD-Standard übertragen werden, ist der Umsetzer 30 angepasst,
- die gemäß dem AHD-Standard empfangenen analogen Videodaten in digitale Videodaten oder
- die empfangenen digitalen Videodaten in analoge Videodaten gemäß dem AHD-Standard umzusetzen.

Beispielsweise können die hochaufgelösten Videodaten analog über die erste Teilstrecke 40.1 gemäß dem AHD-Standard von der Sendeeinrichtung 15 an den Umsetzer 30 übertragen werden - der Umsetzer 30 setzt dann die empfangenen analogen Videodaten in digitale Videodaten um und überträgt diese über die Teilstrecke 40.2 an den Empfänger 25.

In einer anderen Variante kann die Sendeeinrichtung 15 die hochaufgelösten, digitalen Videodaten unverändert, d.h. als hochaufgelöste, digitale Videodaten über die erste Teilstrecke 40.1 an den Umsetzer 30 übertragen - der Umsetzer 30 setzt dann die empfangenen digitalen Bilddaten gemäß dem AHD-Standard in analoge Videodaten um und überträgt diese analog über die zweite Teilstrecke 40.2 an die Empfängereinrichtung 25.

Damit wird es möglich, Leitungen bzw. Kabel, die für die digitale Übertragung hochaufgelöster Videodaten nicht geeignet sind, mit Leitungen bzw. Kabeln, die für die digitale Übertragung hochaufgelöster Videodaten geeignet sind, zu koppeln. Über die Leitungen bzw. Kabel, die für die digitale Übertragung der hochaufgelösten Videodaten nicht geeignet sind, kann die Übertragung gemäß dem AHD-Standard abgewickelt werden.

In einer noch weiteren alternativen Ausgestaltung der Erfindung können die von dem Bildaufhahmesystem 17 bereitgestellten hochaufgelösten, digitalen Videodaten auch über beide Teilstrecken 40.1 und 40.2 gemäß dem AHD-Standard als analoge Videodaten übertragen werden. In diesem Fall kann der Umsetzer 30 so ausgestaltet sein, die gemäß dem AHD-Standard empfangenen analogen Videodaten bzw. Videosignale zu verstärken und gegebenenfalls aufzubereiten und die verstärkten und gegebenenfalls aufbereiteten Videodaten bzw. Videosignale über die zweite Teilstrecke 40.2 an die Empfangseinrichtung 25 zu senden. Damit sind besonders große Reichweiten mit dem AHD-Standard möglich.

### Bezugszeichen:

- 1: Inspektions- und/oder Wartungssystem
- 10: Inspektions- und/oder Wartungseinrichtung (z.B. Fahrwagen, Spüldüse, Schiebekamera) des Inspektions- und/oder Wartungssystems 1
- 15: Sendeeinrichtung bzw. Sender der Inspektions- und/oder Wartungseinrichtung 10
- 17: Bildaufhahmesystem
- 17.1, 17.2: Bildaufnahmesysteme
- 20: Kontrolleinrichtung des Inspektions- und/oder Wartungssystems 1
- 25: Empfangseinrichtung bzw. Empfänger der Kontrolleinrichtung 20
- 30: Umsetzer
- 40: kabelgebundene Kommunikationsverbindung, z.B. Datenkabel
- 40.1, 40.2: Teilstrecken der Kommunikationsverbindung 40
- 41: Steuerkanal
- K: Kanal
- S: Kanalschacht

## Patentansprüche

1. Kanalinspektions- und/oder Wartungssystem (1) mit einer Inspektions- und/oder Wartungseinrichtung (10), die im Kanal verfahrbar oder verschiebbar ist, und einer Kontrolleinrichtung (20), wobei die Inspektions- und/oder Wartungseinrichtung (10) über eine kabelgebundene Kommunikationsverbindung (40) operativ mit der Kontrolleinrichtung (20) verbunden ist, wobei die Inspektions- und/oder Wartungseinrichtung (10) zumindest ein Bildaufnahmesystem (17; 17.1; 17.2) aufweist, wobei das zumindest eine Bildaufnahmesystem (17; 17.1; 17.2) digitale Videodaten bereitstellt, und wobei
- die Inspektions- und/oder Wartungseinrichtung (10) eine Sendeeinrichtung (15) aufweist, die operativ mit dem zumindest einen Bildaufnahmesystem (17; 17.1; 17.2) und mit der Kommunikationsverbindung (40) gekoppelt ist, und
- die Kontrolleinrichtung (20) eine Empfangseinrichtung (25) aufweist, die operativ mit der Kommunikationsverbindung (40) gekoppelt ist,
**dadurch gekennzeichnet, dass**
- die Sendeeinrichtung (15) und die Empfangseinrichtung (25) angepasst sind, die digitalen Videodaten zumindest über eine Teilstrecke (40.1; 40.2) der Kommunikationsverbindung (40) analog gemäß dem AHD Standard, Analog High Definition, zu übertragen,
- die Sendeeinrichtung (15) angepasst ist, die von dem Bildaufnahmesystem (17; 17.1; 17.2) bereitgestellten digitalen Videodaten als analoge Videodaten gemäß dem AHD Standard zu senden, wobei ein Wandler der Sendeeinrichtung (15) angepasst ist, die digitalen Videodaten in analoge Videodaten gemäß dem AHD Standard umzusetzen, und
- die Empfangseinrichtung (25) über Anschlüsse verfügt, über die der Empfangseinrichtung Kontroll- und/oder Steuerdaten zugeführt werden können, wobei die Kommunikationsverbindung (40) einen Steuerkanal (41) aufweist, über den die der Empfangseinrichtung (25) zur Verfügung gestellten Kontroll- und/oder Steuerdaten an die Sendeeinrichtung (15) der Inspektionseinrichtung (10) übertragen werden.

2. Kanalinspektions- und/oder Wartungssystem nach Anspruch 1, wobei die digitalen Videodaten hochaufgelöste digitale Videodaten umfassen.

3. Kanalinspektions- und/oder Wartungssystem nach einem der vorhergehenden Ansprüche, wobei die Empfangseinrichtung (25) angepasst ist,
- die analogen Videodaten gemäß dem AHD Standard zu empfangenen, oder
- digitale Videodaten gemäß einem vorbestimmten digitalen Übertragungsstandard zu empfangen,
wobei ein Wandler der Empfangseinrichtung (25) angepasst ist, die empfangenen Videodaten in ein vorbestimmtes digitales oder analoges Ausgangsformat umzusetzen.

4. Kanalinspektions- und/oder Wartungssystem nach einem der vorhergehenden Ansprüche, wobei die Sendeeinrichtung (15) und die Empfangseinrichtung (25) angepasst sind, die digitalen Videodaten über eine erste Teilstrecke (40.1) der Kommunikationsverbindung (40) analog gemäß dem AHD Standard und über eine zweite Teilstrecke (40.2) der Kommunikationsverbindung (40) digital gemäß einem digitalen Übertragungsstandard zu übertragen.

5. Kanalinspektions- und/oder Wartungssystem nach dem vorhergehenden Anspruch, wobei in der Kommunikationsverbindung (40) zwischen der ersten Teilstrecke (40.1) und der zweiten Teilstrecke (40.2) ein Umsetzer (30) angeordnet ist, der angepasst ist, die gemäß dem AHD Standard empfangenen analogen Videodaten in digitale Videodaten umzusetzen.

6. Kanalinspektions- und/oder Wartungssystem nach einem der vorhergehenden Ansprüche, wobei der Steuerkanal (41) einen bidirektionalen Steuerkanal (41) umfasst.

## Claims

1. Channel inspection and/or maintenance system (1) comprising an inspection and/or maintenance device (10) being movable and/or shiftable in the channel, and a monitoring device (20), the inspection and/or maintenance device (10) being operatively connected to the monitoring device (20) via a wired communication connection (40), the inspection and/or maintenance device (10) having at least one image recording system (17; 17.1; 17.2), the at least one image recording system (17; 17.1; 17.2) providing digital video data, and
- the inspection and/or maintenance device (10) having a transmission device (15) which is operatively coupled to the at least one image recording system (17; 17.1; 17.2) and to the communication connection (40), and
- the monitoring device (20) having a receiving device (25) which is operatively coupled to the communication connection (40),
**characterized in that**
- the transmission device (15) and the receiving device (25) are adapted to transmit the digital video data at least via a portion (40.1; 40.2) of the communication connection (40) in an analog manner according to the AHD standard, Analog High Definition,
- the transmission device (15) is adapted to transmit the digital video data provided by the image recording system (17; 17.1; 17.2) as analog video data according to the AHD standard, a transducer of the transmission device (15) being adapted to convert the digital video data into analog video data according to the AHD standard, and
- the receiving device (25) has connectors via which monitoring and/or control data can be supplied to the receiving device, the communication connection (40) having a control channel (41) via which the monitoring and/or control data provided to the receiving device (25) are transmitted to the transmission device (15) of the inspection device (10).

2. Channel inspection and/or maintenance system according to claim 1, wherein the digital video data comprises high-resolution digital video data.

3. Channel inspection and/or maintenance system according to either of the preceding claims, wherein the receiving device (25) is adapted to
- receive the analog video data according to the AHD standard, or
- receive digital video data according to a predetermined digital transmission standard,
wherein a transducer of the receiving device (25) is adapted to convert the received video data into a predetermined digital or analog output format.

4. Channel inspection and/or maintenance system according to any of the preceding claims, wherein the transmission device (15) and the receiving device (25) are adapted to transmit the digital video data via a first portion (40.1) of the communication connection (40) in an analog manner according to the AHD standard and via a second portion (40.2) of the communication connection (40) digitally according to a digital transmission standard.

5. Channel inspection and/or maintenance system according to the preceding claim, wherein a converter (30) is arranged between the first portion (40.1) and the second portion (40.2) in the communication connection (40), which converter is adapted to convert the analog video data received according to the AHD standard into digital video data.

6. Channel inspection and/or maintenance system according to any of the preceding claims, wherein the control channel (41) comprises a bidirectional control channel (41).

## Revendications

1. Système d'inspection et/ou de maintenance de canalisations (1) comportant un dispositif d'inspection et/ou de maintenance (10) déplaçable et/ou coulissant dans la canalisation et un dispositif de contrôle (20), le dispositif d'inspection et/ou de maintenance (10) étant relié fonctionnellement au dispositif de contrôle (20) par l'intermédiaire d'une liaison de communication filaire (40), le dispositif d'inspection et/ou de maintenance (10) présentant au moins un système de capture d'images (17 ; 17.1 ; 17.2), l'au moins un système de capture d'images (17 ; 17.1 ; 17.2) fournissant des données vidéo numériques, et
- le dispositif d'inspection et/ou de maintenance (10) présentant un dispositif de transmission (15) qui est couplé fonctionnellement à l'au moins un système de capture d'images (17 ; 17.1 ; 17.2) et à la liaison de communication (40), et
- le dispositif de contrôle (20) présentant un dispositif de réception (25) qui est couplé fonctionnellement à la liaison de communication (40),
**caractérisé en ce que**
- le dispositif de transmission (15) et le dispositif de réception (25) sont conçus pour transmettre, de manière analogique conformément au standard AHD, Analogique Haute Définition, les données vidéo numériques au moins sur une section (40.1 ; 40.2) de la liaison de communication (40),
- le dispositif de transmission (15) est conçu pour envoyer les données vidéo numériques fournies par le système de capture d'images (17 ; 17.1 ; 17.2) sous forme de données vidéo analogiques conformément au standard AHD, un convertisseur du dispositif de transmission (15) étant conçu pour convertir, conformément au standard AHD, les données vidéo numériques en données vidéo analogiques, et
- le dispositif de réception (25) dispose de connexions par lesquelles des données de contrôle et/ou de commande peuvent être transmises au dispositif de réception, la liaison de communication (40) présentant un canal de commande (41) par lequel les données de contrôle et/ou de commande fournies au dispositif de réception (25) sont transmises au dispositif de transmission (15) du dispositif d'inspection (10).

2. Système d'inspection et/ou de maintenance de canalisations selon la revendication 1, dans lequel les données vidéo numériques comprennent des données vidéo numériques haute résolution.

3. Système d'inspection et/ou de maintenance de canalisations selon l'une des revendications précédentes, dans lequel le dispositif de réception (25) est conçu pour
- recevoir les données vidéo analogiques conformément au standard AHD, ou
- recevoir des données vidéo numériques conformément à une norme de transmission numérique prédéterminée,
un convertisseur du dispositif de réception (25) étant conçu pour convertir les données vidéo reçues en un format de sortie numérique ou analogique prédéterminé.

4. Système d'inspection et/ou de maintenance de canalisations selon l'une des revendications précédentes, dans lequel le dispositif de transmission (15) et le dispositif de réception (25) sont conçus pour transmettre, de manière analogique conformément au standard AHD, les données vidéo numériques sur une première section (40.1) de la liaison de communication (40) et pour transmettre, de manière numérique conformément à une norme de transmission numérique, la seconde section (40.2) de la liaison de communication (40).

5. Système d'inspection et/ou de maintenance de canalisations selon la revendication précédente, dans lequel un convertisseur (30) est disposé dans la liaison de communication (40) entre la première section (40.1) et la seconde section (40.2), lequel convertisseur est conçu pour convertir les données vidéo analogiques reçues conformément au standard AHD en données vidéo numériques.

6. Système d'inspection et/ou de maintenance de canalisations selon l'une des revendications précédentes, dans lequel le canal de commande (41) comprend un canal de commande bidirectionnel (41).
